# EUROPEAN PATENT APPLICATION

(11) **EP 4 787 448 A1**
(43) Date of publication of application: **05.08.2026**
(21) Application number: 24871794.4
(22) Date of filing: 06.09.2024
(51) Int. Cl.: H01M 4/131, H01M 4/36, H01M 4/505, H01M 4/525, H01M 4/62

(54) **POSITIVE ELECTRODE FOR SECONDARY BATTERIES, AND SECONDARY BATTERY**

(30) Priority: 29.09.2023 JP 2023169466
(71) Applicant: Panasonic Intellectual Property Management Co., Ltd., Kadoma-shi, Osaka 571-0057 (JP)
(72) Inventor: ASAKA, Keisuke, Kadoma-shi, Osaka 571-0057 (JP); SUZUKI, Hirotetsu, Kadoma-shi, Osaka 571-0057 (JP)
(74) Representative: Novagraaf International SA
(86) International application number: PCT/JP2024/032073
(87) International publication number: WO 2025/069996

(57) **Abstract**

The present invention provides a positive electrode for secondary batteries capable of reducing a DC resistance of a secondary battery. The positive electrode for the secondary batteries is characterized by including a positive electrode current collector and a positive electrode mixture layer that is disposed on the positive electrode current collector, wherein the positive electrode mixture layer contains a positive electrode active material and a conductive material; the positive electrode active material contains a lithium transition metal composite oxide and a carbonaceous film that is formed on the surface of the lithium transition metal composite oxide; the carbonaceous film contains at least one of an alkali metal excluding Li and an alkaline earth metal; and the conductive material contains a fibrous conductive material.

## Description

### TECHNICAL FIELD

The present disclosure relates to a positive electrode for secondary batteries and a secondary battery.

### BACKGROUND

In recent years, as a secondary battery having a high output and a high capacity, a secondary battery has been widely used, in which the secondary battery includes a positive electrode, a negative electrode, and an electrolyte, and performs charging and discharging by moving Li ions and the like between the positive electrode and the negative electrode.

For example, Patent Literatures 1 and 2 disclose the use of a composite in which a carbonaceous film is formed on the surface of an active material body as an active material for secondary batteries.

### CITATION LIST

### PATENT LITERATURES

Patent Literature 1: JP 2009-140876 A
Patent Literature 2: JP 2001-015111 A

### SUMMARY

Incidentally, in the secondary battery, a reduction in direct-current resistance is required due to an increase in demand for rapid charging.

Therefore, an object of the present disclosure is to provide a positive electrode for secondary batteries capable of reducing the direct-current resistance of a secondary battery.

A positive electrode for secondary batteries of one aspect of the present disclosure includes: a positive electrode current collector; and a positive electrode mixture layer disposed on the positive electrode current collector, in which the positive electrode mixture layer contains a positive electrode active material and a conductive agent, the positive electrode active material includes a lithium transition metal composite oxide and a carbonaceous film formed on a surface of the lithium transition metal composite oxide, and the carbonaceous film contains at least any one of an alkali metal excluding Li and an alkaline earth metal, and the conductive agent contains a fibrous conductive agent.

A secondary battery of one aspect of the present disclosure includes the positive electrode for secondary batteries, a negative electrode, and an electrolyte.

According to the positive electrode for secondary batteries of one aspect of the present disclosure, the direct-current resistance of the secondary battery can be reduced.

### BRIEF DESCRIPTION OF DRAWINGS

FIG. 1 is a cross-sectional view of a secondary battery as an example of an embodiment.
FIG. 2 is a view showing a result of TEM-EDX analysis for a positive electrode active material of Example.
FIG. 3 is a view showing a result of XPS analysis for positive electrode active materials of Example and Comparative Example 1.

### DESCRIPTION OF EMBODIMENTS

Hereinafter, an example of an embodiment of a non-aqueous electrolyte secondary battery according to the present disclosure will be described.

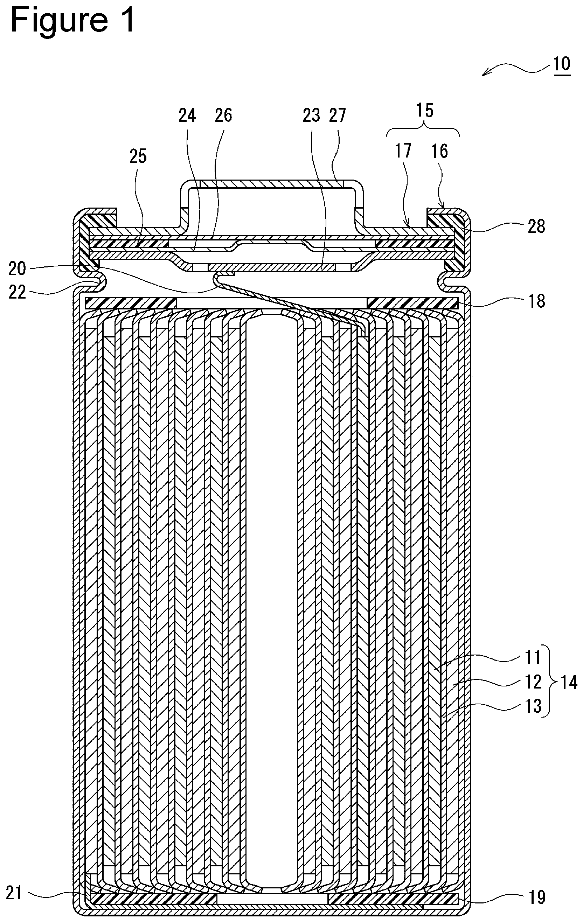

FIG. 1 is a cross-sectional view of a secondary battery according to an embodiment. A secondary battery 10 illustrated in FIG. 1 includes a wound electrode assembly 14 formed by winding a positive electrode 11 and a negative electrode 12 with a separator 13 therebetween, an electrolyte, insulating plates 18 and 19 disposed on the top and bottom of the electrode assembly 14, respectively, and a battery case 15 housing the above members. The battery case 15 includes a bottomed cylindrical case body 16 and a sealing assembly 17 that closes an opening of the case body 16. Note that, instead of the wound electrode assembly 14, an electrode assembly having another form, such as a stacked electrode assembly in which positive electrodes and negative electrodes are alternately stacked with separators interposed therebetween, may be applied. Examples of the battery case 15 include metal cases having a cylindrical shape, a square shape, a coin shape and a button shape, and resin cases (so-called laminate case) formed by laminating resin sheets.

The electrolyte has, for example, ion conductivity (for example, lithium ion conductivity). The electrolyte may be a liquid electrolyte (electrolytic solution) or a solid electrolyte.

The liquid electrolyte (electrolytic solution) contains, for example, a non-aqueous solvent and an electrolyte salt dissolved in the non-aqueous solvent. Examples of the non-aqueous solvent include esters, ethers, nitriles, amides, and mixed solvents of two or more thereof. Examples of the non-aqueous solvent include ethylene carbonate (EC), ethyl methyl carbonate (EMC), dimethyl carbonate (DMC), diethyl carbonate (DEC), and mixed solvents thereof. The non-aqueous solvent may contain a halogen-substituted product (for example, fluoroethylene carbonate or the like) in which at least a part of hydrogen in these solvents is substituted with a halogen atom such as fluorine. As the electrolyte salt, for example, a lithium salt such as LiPF₆ is used.

As the solid electrolyte, for example, a solid or gel polymer electrolyte, an inorganic solid electrolyte, or the like can be used. For example, the polymer electrolyte contains a lithium salt and a matrix polymer or contains a non-aqueous solvent, a lithium salt, and a matrix polymer. As the matrix polymer, for example, a polymer material that absorbs a non-aqueous solvent and gelates is used. Examples of the polymer material include a fluororesin, an acrylic resin, and a polyether resin. Examples of the inorganic solid electrolyte that can be used include materials known in the technical field of, e.g., all-solid-state lithium ion secondary batteries (for example, oxide-based solid electrolytes, sulfide-based solid electrolytes, and halogen-based solid electrolytes). Note that, the electrolytes mentioned above as examples are non-aqueous electrolytes but the electrolyte is not limited to a non-aqueous electrolyte, and may be an aqueous electrolyte.

The case body 16 is, for example, a bottomed cylindrical metal container. A gasket 28 is provided between the case body 16 and the sealing assembly 17 to keep the interior of the battery airtight. The case body 16 has a projecting portion 22 that has, for example, a side surface partially projecting inward and supports the sealing assembly 17. The projecting portion 22 is preferably formed in an annular shape along a circumferential direction of the case body 16, and supports the sealing assembly 17 on a top surface of the projecting portion 22.

The sealing assembly 17 has a structure formed by stacking a filter 23, a lower vent member 24, an insulating member 25, an upper vent member 26, and a cap 27 in this order from the electrode assembly 14 side. Each of the members constituting the sealing assembly 17 has, for example, a disk shape or a ring shape. The members other than the insulating member 25 are electrically connected to each other. The lower vent member 24 and the upper vent member 26 are mutually connected at the center and the insulating member 25 is interposed between the circumferential portions of them. When the internal pressure of the secondary battery 10 increases due to heat generated by an internal short circuit or the like, for example, the lower vent member 24 deforms so as to push the upper vent member 26 up toward the cap 27 side and breaks, so that a current path between the lower vent member 24 and the upper vent member 26 is cut off. When the internal pressure further increases, the upper vent member 26 is broken, and gas is released through the opening of the cap 27.

In the secondary battery 10 illustrated in FIG. 1, a positive electrode lead 20 attached to the positive electrode 11 extends to the sealing assembly 17 side through a through hole of the insulating plate 18, and a negative electrode lead 21 attached to the negative electrode 12 extends to the bottom side of the case body 16 through the outside of the insulating plate 19. The positive electrode lead 20 is connected to a lower surface of the filter 23, which is a bottom plate of the sealing assembly 17, by welding or the like, and the cap 27, which is a top plate of the sealing assembly 17 electrically connected to the filter 23, serves as a positive electrode terminal. The negative electrode lead 21 is connected to a bottom inner surface of the case body 16 by welding or the like, and the case body 16 serves as a negative electrode terminal.

Hereinafter, the positive electrode 11, the negative electrode 12, and the separator 13 constituting the secondary battery 10 will be described in detail.

### [Positive Electrode]

The positive electrode 11 has a positive electrode current collector and a positive electrode mixture layer disposed on the positive electrode current collector. The positive electrode mixture layer may be disposed on one surface or both surfaces of the positive electrode current collector. As the positive electrode current collector, a foil of a metal such as aluminum or an aluminum alloy which is stable in a potential range of the positive electrode 11, a film in which the metal is disposed on the surface layer thereof, or the like can be used. The positive electrode mixture layer contains a positive electrode active material and a conductive agent. The positive electrode mixture layer may contain a binding material. The positive electrode 11 can be produced by, for example, applying a positive electrode mixture slurry containing the positive electrode active material, the conductive agent, the binding material, and the like to the surface of the positive electrode current collector, drying a coating film, and then rolling the coating film using a roller or the like.

The conductive agent contained in the positive electrode mixture layer contains a fibrous conductive agent. Examples of the fibrous conductive agent include fibrous carbon such as carbon nanotubes (CNT), carbon nanofibers (CNF), vapor-grown carbon fibers, electrospinning carbon fibers, polyacrylonitrile (PAN)-based carbon fibers, and pitch-based carbon fibers, fibrous metal obtained by fiberizing a metal such as stainless steel, conductive fibers obtained by coating the surface of organic fibers with a conductive substance such as a metal or a carbon material, and conductive fibers obtained by coating the surface of organic fibers with a resin containing a conductive substance. When the fibrous conductive agent is contained in the positive electrode mixture layer, for example, the particles of the positive electrode active material are bridged by the fibrous conductive agent, so that the electron conductivity of the positive electrode mixture layer is improved, and the direct-current resistance of the secondary battery is reduced.

The fibrous conductive agent preferably contains fibrous carbon and more preferably contains a carbon nanotube, for example, from the viewpoint of reducing the direct-current resistance of the secondary battery. The length (fiber length) of the carbon nanotube is, for example, preferably greater than or equal to 0.1 µm, more preferably greater than or equal to 0.1 µm and less than or equal to 20 µm, more preferably greater than or equal to 1 µm and less than or equal to 10 µm, and more preferably greater than or equal to 1 µm and less than or equal to 5 µm, for example, from the viewpoint of reducing the direct-current resistance of the secondary battery. The outermost peripheral diameter of the carbon nanotube is preferably greater than or equal to 1 nm and less than or equal to 20 nm, and more preferably greater than or equal to 1.5 nm and less than or equal to 10 nm, for example, from the viewpoint of improving the conductivity of the carbon nanotube and viewpoint that the conductive path of the positive electrode mixture layer can be ensured by adding a small amount of carbon fiber due to the improvement of the conductivity. The aspect ratio of the carbon nanotube (length/outermost peripheral diameter of the carbon nanotube) is preferably greater than or equal to 5, and more preferably greater than or equal to 100. The length and outermost peripheral diameter of the carbon nanotube refer to the length and outermost peripheral diameter of the fiber alone, and can be determined by measuring the lengths and outer diameters (outermost peripheral diameters) of 50 arbitrary carbon nanotubes with a field-emission scanning electron microscope (FE-SEM) or a transmission electron microscope (TEM) and arithmetically averaging the measured values.

Examples of the carbon nanotubes include single-walled carbon nanotubes, double-walled carbon nanotubes, and multi-walled carbon nanotubes. The single-walled carbon nanotube (SWCNT) is a carbon nanostructure in which one layer of graphene sheets forms one cylindrical shape, the double-walled carbon nanotube is a carbon nanostructure in which two layers of graphene sheets are concentrically laminated to form one cylindrical shape, and the multi-walled carbon nanotube is a carbon nanostructure in which three or more layers of graphene sheets are concentrically laminated to form one cylindrical shape. The graphene sheet refers to a layer in which a carbon atom in an sp2 hybrid orbital forming a crystal of graphite is located at an apex of a regular hexagon.

The content of the fibrous conductive agent is, for example, preferably greater than or equal to 0.01 mass% and less than or equal to 10 mass%, and more preferably greater than or equal to 0.1 mass% and less than or equal to 0.5 mass%, with respect to the total mass of the positive electrode mixture layer from the viewpoint of reducing the direct-current resistance of the secondary battery.

The conductive agent may contain a conductive agent other than the fibrous conductive agent in addition to the fibrous conductive agent. Examples of the conductive agent other than fibrous carbon include particulate conductive agents such as carbon black, acetylene black, Ketjenblack, and graphite.

Examples of the binding material to be contained in the positive electrode mixture layer include fluorine-containing resins such as polytetrafluoroethylene (PTFE) and polyvinylidene fluoride (PVdF), polyacrylonitrile (PAN), polyimide, an acrylic resin, and polyolefin. Carboxymethyl cellulose (CMC) or a salt thereof, polyethylene oxide (PEO), or the like may be used. The content of the binding material is, for example, greater than or equal to 0.1 mass% and less than or equal to 10 mass%, preferably greater than or equal to 0.5 mass% and less than or equal to 5 mass% with respect to the total mass of the positive electrode mixture layer.

The positive electrode active material contained in the positive electrode mixture layer includes a lithium transition metal composite oxide and a carbonaceous film formed on the surface of the lithium transition metal composite oxide, in which the carbonaceous film contains at least any one of an alkali metal excluding Li and an alkaline earth metal. As a result, the electron conductivity of the positive electrode active material is improved. The electron conductivity of the positive electrode mixture layer is improved together with the addition effect of the fibrous conductive agent described above, and the direct-current resistance of the secondary battery is reduced.

The lithium transition metal composite oxide includes, for example, secondary particles formed by aggregation of primary particles. Here, the surface of the lithium transition metal composite oxide means the surfaces of the secondary particles of the lithium transition metal composite oxide. That is, the carbonaceous film is present at least on the surfaces of the secondary particles of the lithium transition metal composite oxide. The carbonaceous film may be present in a spotted manner to cover at least a part of the surfaces of the secondary particles of the lithium transition metal composite oxide, or may be present to cover the entire surface of the secondary particles. The carbonaceous film may be present at an interface where the primary particles of the lithium transition metal composite oxide are in contact with each other.

The particle diameter of each of the primary particles forming the secondary particles of the lithium transition metal composite oxide is, for example, greater than or equal to 0.02 µm and less than or equal to 2 µm. The particle diameter of each of the primary particles is measured as a diameter of a circumscribed circle in a particle image observed by a scanning electron microscope (SEM). The average particle diameter of the secondary particles of the lithium transition metal composite oxide is, for example, greater than or equal to 2 µm and less than or equal to 30 µm. Here, the average particle diameter means a volume-based median diameter (D50). D50 means a particle diameter in which the cumulative frequency in a volume-based particle size distribution is 50% from the smallest particle diameter, and is also referred to as a median diameter. The particle size distribution of the secondary particles of the lithium transition metal composite oxide can be measured using a laser diffraction type particle size distribution measuring apparatus (for example, MT3000II manufactured by MicrotracBEL Corp.) using water as a dispersion medium.

The lithium transition metal composite oxide has, for example, a layered rock salt structure belonging to a space group R-3m, a space group C2/m, and the like. From the viewpoint of higher capacity, stability of a crystal structure, and the like, the lithium transition metal composite oxide preferably has a layered rock salt structure belonging to the space group R-3m. The layered rock salt structure of the lithium transition metal composite oxide may include a transition metal layer, a Li layer, and an oxygen layer. As Li ions present in the Li layer reversibly enter and exit, a charging-and-discharging reaction of the battery proceeds.

The content ratio of Co in the lithium transition metal composite oxide is preferably less than or equal to 5 mol%, more preferably less than or equal to 2 mol%, still more preferably less than or equal to 1 mol%, and particularly preferably 0.1 mol% with respect to the total number of moles of metal elements excluding Li. Since Co is a rare metal and is expensive, it is preferable to reduce the usage amount of Co.

The lithium transition metal composite oxide may be represented by a general formula LiₐNi_{1-x-y}MnₓM_{y}O_{2+b}. Note that the general formula satisfies 0.9 ≤ a ≤ 1.1, 0 ≤ x ≤ 0.5, 0 ≤ y ≤ 0.1, 0.5 ≤ 1-x-y ≤ 0.95, and -0.05 ≤ b ≤ 0.05, and the element M is an element other than Li, Ni, Mn, and oxygen. Note that a value of "a" that indicates the molar ratio of lithium is increased or reduced by charging and discharging. The element M is preferably at least one type selected from the group consisting of Co, Nb, Al, Zr, B, Fe, Cu, Zn, Sn, W, Mo, Si, Ti, Fe, and Cr from the viewpoint of, for example, stability of the crystal structure of the lithium transition metal composite oxide.

The content ratio of the elements constituting the lithium transition metal composite oxide can be measured by an inductively coupled plasma atomic emission spectroscopy (ICP-AES), an electron probe microanalyzer (EPMA), or the like.

The carbonaceous film only needs to contain at least one of an alkali metal excluding Li and an alkaline earth metal, and preferably contains at least one of Na and K from the viewpoint of enhancing the electron conductivity of the positive electrode active material. The carbonaceous film preferably further contains S from the viewpoint of enhancing the electron conductivity of the positive electrode active material. Note that the carbonaceous film may contain Li. The presence of S in the carbonaceous film can be confirmed by energy dispersive X-ray spectroscopy (TEM-EDX). The presence of alkali metals such as Na and K and alkaline earth metals in the carbonaceous film can be confirmed by X-ray photoelectron spectroscopy (XPS).

A thickness of the carbonaceous film is, for example, less than or equal to 30 nm. A lower limit value of the thickness of the carbonaceous film is, for example, 1 nm. The thickness of the carbonaceous film is measured by an image of a cross section of the positive electrode active material observed by a transmission electron microscope (TEM).

The positive electrode mixture layer may contain other positive electrode active materials in addition to the lithium transition metal composite oxide having a carbonaceous film formed on the surface thereof. Examples of other positive electrode active materials include a lithium transition metal composite oxide having no carbonaceous film on the surface thereof. The content of the lithium transition metal composite oxide having a carbonaceous film formed on the surface thereof is preferably greater than or equal to 90 mass% and more preferably greater than or equal to 99 mass% with respect to the total mass of the positive electrode active material.

Hereinafter, an example of a method for forming a carbonaceous film on the surface of a lithium transition metal composite oxide will be described.
(1) An anionic surfactant is dissolved in water to produce an aqueous solution.
(2) A powder of a lithium transition metal composite oxide is added to the aqueous solution and stirred to adjust a suspension in which the lithium transition metal composite oxide is dispersed in the aqueous solution.
(3) By firing the residue obtained by filtering the suspension, a carbonaceous film can be formed on the surface of the lithium transition metal composite oxide.

The anionic surfactant is adsorbed on the surface of the lithium transition metal composite oxide in water, and a substantially uniform carbonaceous film can be produced. The surfactant is not particularly limited as long as the surfactant contains C and at least one of an alkali metal excluding Li and an alkaline earth metal. The surfactant preferably contains at least one of Na and K. The surfactant may further contain S. Examples of the surfactant include sodium lauryl sulfate and potassium lauryl sulfate. The concentration of the surfactant in the aqueous solution is, for example, greater than or equal to 0.1 mass% and less than or equal to 10 mass%, and preferably greater than or equal to 1 mass% and less than or equal to 10 mass%.

### [Negative Electrode]

The negative electrode 12 includes, for example, a negative electrode current collector and a negative electrode mixture layer disposed on the negative electrode current collector. The negative electrode mixture layer may be disposed on only one surface or both surfaces of the negative electrode current collector. As the negative electrode current collector, a foil of a metal such as copper or a copper alloy which is stable in a potential range of the negative electrode 12, a film in which the metal is disposed on the surface layer thereof, or the like can be used. The negative electrode mixture layer contains, for example, a negative electrode active material and a binding material. The negative electrode 12 can be produced by, for example, applying a negative electrode mixture slurry including the negative electrode active material, the binding material, and the like to the surface of the negative electrode current collector, drying a coating film, and then rolling the coating film using a roller or the like.

The negative electrode active material contained in the negative electrode mixture layer is not particularly limited as long as the negative electrode active material can reversibly occlude and discharge lithium ions, and a carbon material such as graphite is generally used. As the graphite, any of natural graphites such as scale-like graphite, massive graphite, and earthy graphite and artificial graphites such as massive artificial graphite and graphitized mesophase carbon microbeads may be used. Further, as the negative electrode active material, a metal alloyed with Li such as Si or Sn, a metal compound containing Si or Sn, a lithium titanium composite oxide, or the like may be used. For example, a Si-containing compound represented by SiOₓ (0.5 ≤ x ≤ 1.6), a Si-containing compound in which Si fine particles are dispersed in a lithium silicate phase represented by Li_{2y}SiO_{(2+y)} (0 < y < 2), or the like may be used in combination with graphite.

Examples of the binding material contained in the negative electrode mixture layer include styrene butadiene rubber (SBR), nitrile-butadiene rubber (NBR), carboxymethyl cellulose (CMC) or a salt thereof (CMC-Na, CMC-K, CMC-NH₄, and the like, or partially neutralized salts may be used), polyacrylic acid (PAA) or a salt thereof (PAA-Na, PAA-K, and the like, and partially neutralized salts may be used), and polyvinyl alcohol (PVA). The resins may be used alone or in combination of two or more kinds thereof. The content of the binding material is, for example, greater than or equal to 0.1 parts by mass and less than or equal to 10 parts by mass, preferably greater than or equal to 0.5 parts by mass and less than or equal to 5 parts by mass, with respect to 100 parts by mass of the negative electrode active material. The negative electrode mixture layer may contain a conductive agent as in the case of the positive electrode.

### [Separator]

As the separator 13, for example, a porous sheet having ion permeability and insulating properties is used. Specific examples of the porous sheet include a microporous thin film, a woven fabric, and a nonwoven fabric. As a material of the separator, polyolefin such as polyethylene and polypropylene, cellulose, and the like are suitable. The separator 13 may be a laminate including a cellulose fiber layer and a thermoplastic resin fiber layer such as an olefin-based resin. In addition, a multi-layer separator including a polyethylene layer and a polypropylene layer may be used, and the separator 13 whose surface is coated with a material such as an aramid-based resin or ceramic may be used.

### EXAMPLES

Hereinafter, the present disclosure will be further described with reference to Example and Comparative Examples, but the present disclosure is not limited to the following Example.

### [Production of Positive Electrode Active Material]

### <Example>

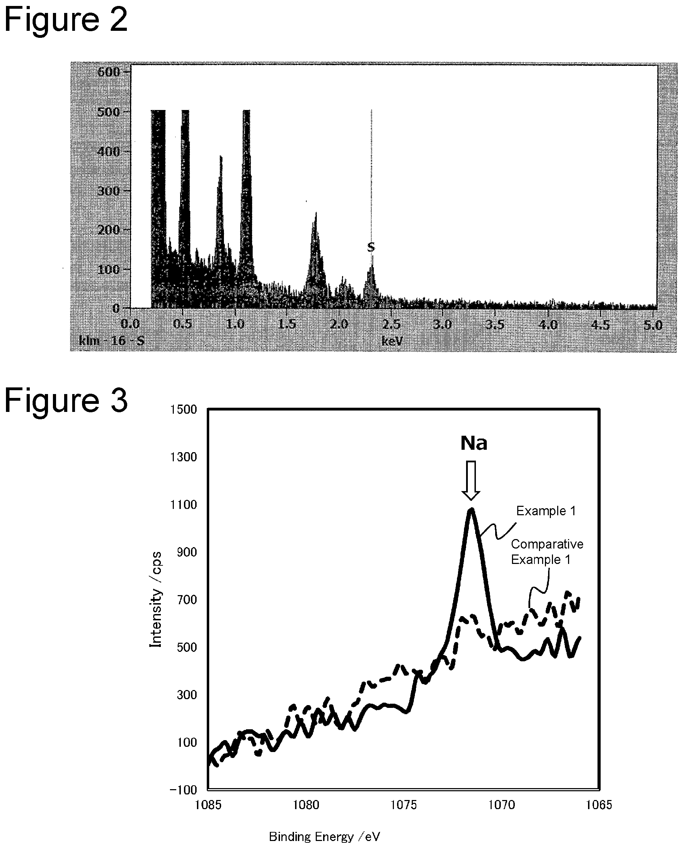

Sodium lauryl sulfate as a surfactant was dissolved in water to produce an aqueous solution of 10 mass%. A lithium transition metal composite oxide having a composition of LiNi_{0.8}Mn_{0.2}O₂ was added to the aqueous solution, and the mixture thereof was stirred to adjust a suspension having a concentration of 1000 g/L. The residue obtained by filtering the suspension was subjected to vacuum firing. As a result, a lithium transition metal composite oxide having a carbonaceous film formed on the surface thereof was obtained. This was used as the positive electrode active material of Example. As a result of observation by a transmission electron microscope (TEM), a thickness of a carbonaceous film was 10 nm. As illustrated in FIG. 2, as a result of observation by energy dispersive X-ray spectroscopy (TEM-EDX), a peak attributed to S was observed in the vicinity of 2.2 keV, and the presence of S in the carbonaceous film was confirmed. As shown in FIG. 3, the presence of Na in the carbonaceous film was confirmed in the XPS analysis for the positive electrode active material of Example.

### [Production of Positive Electrode]

A positive electrode active material, acetylene black, carbon nanotube (length: 2.5 µm, aspect ratio: 300), and polyvinylidene fluoride were mixed at a solid content mass ratio of 100 : 1 : 0.5 : 1, and this was mixed with N-methyl-2-pyrrolidone (NMP), thereby preparing a positive electrode mixture slurry. Subsequently, the positive electrode mixture slurry was applied to one surface of a positive electrode current collector made of an aluminum foil having a thickness of 15 µm, a coating film was dried, the coating film was rolled by a rolling roller, and then the coating film was cut into a predetermined electrode size to produce a positive electrode for evaluation. The positive electrode was provided with a region to function as a positive electrode of 20 mm × 20 mm and a connection region with a lead of 5 mm × 5 mm. Thereafter, the positive electrode mixture layer formed on the connection region was further scraped off to expose the positive electrode current collector. Thereafter, an exposed portion of the positive electrode current collector was connected to a positive electrode lead, and a predetermined region on the outer periphery of the positive electrode lead was covered with an insulating film.

### [Production of Negative Electrode]

A lithium metal foil (thickness: 300 µm) was cut into a size of 25 mm × 25 mm to obtain a negative electrode for evaluation. The lithium metal foil was connected to the negative electrode lead via a Ni mesh of 5 mm × 5 mm, and a predetermined region on the outer periphery of the negative electrode lead was covered with an insulating film.

### [Preparation of Non-Aqueous Electrolyte]

Ethylene carbonate (EC), ethyl methyl carbonate (EMC), and dimethyl carbonate (DMC) were mixed at a volume ratio of 20 : 5 : 75. Lithium hexafluorophosphate (LiPF₆) was dissolved in the mixed solvent to have a concentration of 1.3 mol/liter, thereby preparing a non-aqueous electrolyte (non-aqueous electrolytic solution).

### [Production of Battery for Evaluation]

A battery for evaluation was produced using a positive electrode and a negative electrode for evaluation. First, the positive electrode and the negative electrode were disposed to face each other with a separator interposed therebetween so that a positive electrode mixture layer and a negative electrode lithium metal layer overlap each other, thereby obtaining an electrode plate group. Next, an Al laminate film (thickness: 100 µm) cut into a rectangular shape of 60 × 90 mm was folded in half, and an end on a long side of 60 mm was thermally sealed at 230°C, thereby forming a cylindrical shape of 60 × 45 mm. Thereafter, the produced electrode plate group was placed in the cylinder, and the positions of the end surface of the Al laminate film and the insulating film of each lead were aligned with each other and thermally sealed at 230°C. Next, 0.3 cm³ of a non-aqueous electrolytic solution was injected from the short side of the Al laminate film which was not thermally sealed, and after the injection, the Al laminate film was caused to stand still for 3 minutes under a reduced pressure of 0.06 MPa, and each mixture layer was impregnated with the electrolytic solution. Finally, the end surface of the Al laminate film on the injected side was thermally sealed at 230°C to produce a battery for evaluation. A battery for evaluation was produced under a dry environment with a dew point less than or equal to -50°C.

### [Evaluation of Direct-Current Resistance (DCIR)]

Under a temperature environment of 25°C, the battery was charged at a constant current of 0.2 C to 4.5 V, and then charged at a constant voltage of 4.5 V to 0.05 C. Thereafter, constant current discharge was performed at a constant current of 0.2 C until a cell voltage reached 2.5 V. Next, constant current charge was performed at 0.2 C until the state of charge (SOC) reached 50%. Thereafter, the battery was rested for 2 hours, a resistance value was calculated from the voltage drop before and after discharging at a current of 0.3 C for 30 seconds, and this value was defined as DCIR.

### <Comparative Example 1>

A battery for evaluation was produced in the same manner as in Example except that, in the production of the positive electrode active material, sodium lauryl sulfate was not added, and in the production of the positive electrode, the carbon nanotube was not added and the acetylene black was changed from 1 part by mass to 1.5 parts by mass. Note that, as shown in FIG. 3, the presence of Na could not be confirmed in the XPS analysis for the positive electrode active material of Comparative Example 1.

### <Comparative Example 2>

A battery for evaluation was produced in the same manner as in Example except that, in the production of the positive electrode, the carbon nanotube was not added and the acetylene black was changed from 1 part by mass to 1.5 parts by mass.

### <Comparative Example 3>

A battery for evaluation was produced in the same manner as in Example except that, in the production of the positive electrode active material, sodium lauryl sulfate was not added.

DCIR evaluation results of the batteries of Example and Comparative Examples are shown in Table 1. In Table 1, the DCIR value of Comparative Example 1 is 100, and the DCIR values of Example and other Comparative Examples are shown as relative values.

**[Table 1]**

| | Positive electrode active material | | CNT content wt% | DCIR [index] |
|---|---|---|---|---|
| | Lithium transition metal composite oxide | Carbonaceous film | | |
| Example 1 | LiNi_{0.8}Mn_{0.2}O₂ | Present | 0.5 | 83.3 |
| Comparative Example 1 | LiNi_{0.8}Mn_{0.2}O₂ | No | 0 | 100 |
| Comparative Example 2 | LiNi_{0.8}Mn_{0.2}O₂ | Present | 0 | 94.8 |
| Comparative Example 3 | LiNi_{0.8}Mn_{0.2}O₂ | No | 0.5 | 102.6 |

As shown in Table 1, the battery of Example had lower DCIR than those of the batteries of Comparative Examples 1 to 3. From this result, it is possible to reduce the direct-current resistance of the battery by using, as a positive electrode active material, a lithium transition metal composite oxide in which a carbonaceous film containing at least one of an alkali metal excluding Li and an alkaline earth metal is formed on the surface, and using a fibrous conductive agent as a conductive agent contained in the positive electrode mixture layer.

The present disclosure is further described by the following embodiments.

### Configuration 1:

A positive electrode for secondary batteries, including: a positive electrode current collector; and a positive electrode mixture layer disposed on the positive electrode current collector, in which
the positive electrode mixture layer contains a positive electrode active material and a conductive agent,
the positive electrode active material includes a lithium transition metal composite oxide and a carbonaceous film formed on a surface of the lithium transition metal composite oxide, and the carbonaceous film contains at least any one of an alkali metal excluding Li and an alkaline earth metal, and
the conductive agent contains a fibrous conductive agent.

### Configuration 2:

The positive electrode for secondary batteries according to configuration 1, in which the fibrous conductive agent contains a carbon nanotube having a length of greater than or equal to 0.1 µm and an aspect ratio of greater than or equal to 5.

### Configuration 3:

The positive electrode for secondary batteries according to configuration 1 or 2, in which the carbonaceous film further contains S.

### Configuration 4:

The positive electrode for secondary batteries according to any one of configurations 1 to 3, in which the carbonaceous film contains at least one of Na and K.

### Configuration 5:

The positive electrode for secondary batteries according to any one of configurations 1 to 4, in which a content ratio of Co in the lithium transition metal composite oxide is less than or equal to 5 mol% with respect to a total number of moles of metal elements excluding Li.

### Configuration 6:

The positive electrode for secondary batteries according to any one of configurations 1 to 5, in which the lithium transition metal composite oxide is represented by a general formula LiₐNi_{1-x-y}MnₓM_{y}O_{2+b} (where 0.9 ≤ a ≤ 1.1, 0 ≤ x ≤ 0.5, 0 ≤ y ≤ 0.1, 0.5 ≤ 1-x-y ≤ 0.95, and -0.05 ≤ b ≤ 0.05 are satisfied, and the element M is an element other than Li, Ni, Mn, and oxygen).

### Configuration 7:

The positive electrode for secondary batteries according to any one of configurations 1 to 6, in which a thickness of the carbonaceous film is less than or equal to 30 nm.

### Configuration 8:

A secondary battery including: the positive electrode for secondary batteries according to any one of configurations 1 to 7; a negative electrode; and an electrolyte.

### REFERENCE SIGNS LIST

- 10: Secondary battery
- 11: Positive electrode
- 12: Negative electrode
- 13: Separator
- 14: Electrode assembly
- 15: Battery case
- 16: Case body
- 17: Sealing assembly
- 18, 19: Insulating plate
- 20: Positive electrode lead
- 21: Negative electrode lead
- 22: Projecting portion
- 23: Filter
- 24: Lower vent member
- 25: Insulating member
- 26: Upper vent member
- 27: Cap
- 28: Gasket

## Claims

1. A positive electrode for secondary batteries, comprising: a positive electrode current collector; and a positive electrode mixture layer disposed on the positive electrode current collector, wherein
the positive electrode mixture layer contains a positive electrode active material and a conductive agent,
the positive electrode active material includes a lithium transition metal composite oxide and a carbonaceous film formed on a surface of the lithium transition metal composite oxide, and the carbonaceous film contains at least any one of an alkali metal excluding Li and an alkaline earth metal, and
the conductive agent contains a fibrous conductive agent.

2. The positive electrode for secondary batteries according to claim 1, wherein the fibrous conductive agent contains a carbon nanotube having a length of greater than or equal to 0.1 µm and an aspect ratio of greater than or equal to 5.

3. The positive electrode for secondary batteries according to claim 1 or 2, wherein the carbonaceous film further contains S.

4. The positive electrode for secondary batteries according to claim 1 or 2, wherein the carbonaceous film contains at least any one of Na and K.

5. The positive electrode for secondary batteries according to claim 1 or 2, wherein a content ratio of Co in the lithium transition metal composite oxide is less than or equal to 5 mol% with respect to a total number of moles of metal elements excluding Li.

6. The positive electrode for secondary batteries according to claim 1 or 2, wherein the lithium transition metal composite oxide is represented by a general formula LiₐNi_{1-x-y}MnₓM_{y}O_{2+b} (where 0.9 ≤ a ≤ 1.1, 0 ≤ x ≤ 0.5, 0 ≤ y ≤ 0.1, 0.5 ≤ 1-x-y ≤ 0.95, and -0.05 ≤ b ≤ 0.05 are satisfied, and the element M is an element other than Li, Ni, Mn, and oxygen).

7. The positive electrode for secondary batteries according to claim 1 or 2, wherein a thickness of the carbonaceous film is less than or equal to 30 nm.

8. A secondary battery comprising: the positive electrode for secondary batteries according to claim 1 or 2; a negative electrode; and an electrolyte.
